# EUROPÄISCHE PATENTSCHRIFT

(11) **EP 2 410 090 B1**
(45) Veröffentlichungstag und Bekanntmachung des Hinweises auf die Patenterteilung: **11.03.2015**
(21) Anmeldenummer: 11005645.4
(22) Anmeldetag: 11.07.2011
(51) Int. Cl.: E01B 9/48, E01B 9/30

(54) **Schienenbefestigungssystem**
Rail fixing system
Système de fixation de rails

(30) Priorität: 19.07.2010 DE 102010027560
(43) Veröffentlichungstag der Anmeldung: 25.01.2012
(73) Patentinhaber: SCHWIHAG AG, 8274 Tägerwilen (CH)
(72) Erfinder: Buda, Roland, 78315 Radolfzell am Bodensee (DE)
(74) Vertreter: Grosse, Wolf-Dietrich Rüdiger

(56) Entgegenhaltungen:
- EP-A1- 0 295 685
- EP-A2- 1 693 514
- DE-A1- 3 918 091
- DE-C2- 3 400 110

## Beschreibung

Die Erfindung betrifft ein Schienenbefestigungssystem zur kraftschlüssig-elastischen Befestigung einer Schiene auf einer Schwelle einer Gleisanlage, umfassend mindestens eine an der Schwelle mit mindestens einer Schraube festlegbare Winkelführungsplatte und mindestens eine Spannklemme.

Eine gattungsgemäße Schienenbefestigung ist aus der DE 34 00 110 C2 bekannt, wobei ein Befestigungssystem offenbart wird, bei dem die Verspannung der Eisenbahnschiene mittels der Komponenten Schraube, Dübel, Winkelführungsplatte und Spannklemme erfolgt. Es kommt eine Spannklemme zum Einsatz, die im montierten Zustand zwischen einer Winkelführungsplatte (Halteplatte) und einer Schraube (Befestigungsanker) angeordnet ist. Die Spannklemme weist dabei zwei Schenkel auf, die als Torsionselemente gestaltet sind. Die Torsionsschenkel haben zwei parallel nebeneinander liegende Federstababschnitte, die einstückig durch eine einen Verspannungsabschnitt bildenden und im wesentlichen quer zu ihnen nach außen gebogene Schlaufe in Verbindung stehen.

An ein gattungsgemäßes Schienenbefestigungssystem stellen sich dabei verschiedene Aufgaben:
Zunächst ist es wünschenswert, dass verschiedene Schienentypen (beispielsweise Typ U 50 und Typ UIC 60) mit unterschiedlichen Schienenfußbreiten auf unterschiedlichen Betonschwellentypen mit nur einem Spannklemmtyp verspannt werden können. Die Anpassung kann dabei über verschiedene Winkelführungsplatten erfolgen.

Dann ist es für eine einfache, kostengünstige und sichere Montage des Schienenbefestigungssystems vorteilhaft, wenn die Montage durch Verschiebung der Spannklemme von einer Vormontageposition (mit einer Verspannung der Schraube mit einem Drehmoment von ca. 50 Nm) in die Endmontageposition erfolgen kann. Hierbei ist es wichtig, dass ein einfaches Schieben der Spannklemme mittels eines Schiebers ohne vorheriges Lösen der (mit dem genannten Drehmoment vorgespannten) Schraube erfolgen kann. Wichtig ist hierbei ferner, dass ein Anheben der Schwelle hierbei nicht nötig ist, was die Montage wesentlich erschweren würde. Nur so ist eine automatisierte Montage möglich.

Ein weiterer Aspekt ist, dass die Schienenbefestigung einen hohen elektrischen Widerstandswert erreicht. Dieser wird zwischen den beiden Schienen auf einer Betonschwelle im nassen Zustand gemessen, d. h. der Widerstandswert wird während einer Dauerberegnung gemessen.

Die vorbekannten Schienenbefestigungssysteme weisen hinsichtlich dieser Aufgabenfelder noch Schwachstellen auf.

Der Erfindung liegt daher die Aufgabe zugrunde, ein Schienenbefestigungssystem der eingangs genannten Art so fortzubilden, dass die oben beschriebenen Anforderungen optimal erfüllt werden können. Demgemäß soll eine einfache und automatisierte Montage des Systems möglich sein, die sich an verschiedene Schienentypen einfach anpassen lässt. Weiterhin soll sich das System durch einen hohen elektrischen Widerstand auszeichnen.

Die Lösung dieser Aufgabe durch die Erfindung ist dadurch gekennzeichnet, dass die Winkelführungsplatte ausgebildet ist, um die Spannklemme in einer Vormontageposition und in einer Endmontageposition zu halten, wobei die Endmontageposition durch Verschieben der Spannklemme relativ zur Winkelführungsplatte aus der Vormontageposition in Richtung senkrecht zur Längsachse der Schiene auf die Schiene zu eingenommen wird, wobei die Spannklemme in der Vormontageposition und in der Endmontageposition durch den Kopf der mindestens einen Schraube direkt oder indirekt (über eine Unterlegscheibe) in Richtung auf die Winkelführungsplatte vorgespannt ist, wobei für die direkte oder indirekte Auflage des Kopfs der Schraube in der Vormontageposition mindestens eine erste im wesentlichen ebene Auflagefläche an der Spannklemme vorgesehen ist, wobei für die direkte oder indirekte Auflage des Kopfs der Schraube in der Endmontageposition mindestens eine zweite im wesentlichen ebene Auflagefläche an der Spannklemme vorgesehen ist und wobei die Ebene der ersten Auflagefläche und die Ebene der zweiten Auflagefläche relativ zueinander um einen Winkel verschwenkt angeordnet sind.

Der Winkel liegt dabei bevorzugt zwischen 2° und 30° liegt, besonders bevorzugt zwischen 3° und 20°.

Die Spannklemme kann zwei parallel zueinander verlaufende Abschnitte aufweisen, die an einem Ende über einen Schlaufenabschnitt miteinander verbunden sind und eine Mittelschlaufe bilden, und dass beidseitig neben der Mittelschlaufe je ein Spannklemmenarm angeordnet ist, wobei die erste und zweite Auflagefläche auf der Oberseite der Mittelschlaufe angeordnet sind.

Der Schlaufenabschnitt kann in Richtung des Schienenfußes zu gebogen sein, so dass der gebogene Abschnitt in der Endmontageposition mit einem geringen Abstand, insbesondere mit einem Abstand zwischen 0,5 mm und 3 mm, vom Schienenfuß entfernt liegt. Hierdurch wird in vorteilhafter Weise ein effizienter Kippschutz bewerkstelligt.

Jeder Spannklemmenarm kann einen im wesentlichen parallel zu einem Abschnitt der Mittelschlaufe verlaufenden Spannabschnitt aufweisen, an den sich ein Schienenauflageabschnitt anschließt, der zum Spannabschnitt unter einem Winkel verläuft, der vorzugsweise zwischen 80° und 100° beträgt.

Die Winkelführungsplatte kann für den Schienenauflageabschnitt der Spannklemme eine vorzugsweise keilförmig ausgebildete Auflage aufweisen, auf der der Schienenauflageabschnitt in der Vormontageposition aufliegt. Das der Schiene zugewandte Ende der vorzugsweise keilförmig ausgebildeten Auflage kann dabei mit Vorteil den Schienenfuß um eine vorgegebene Höhe überragen, vorzugsweise um eine Höhe zwischen 5 mm und 15 mm. Wie später noch erläutert wird, vereinfacht sich damit die Montage wesentlich im Falle von Unebenheiten.

Zwischen dem Kopf der Schraube und der Winkelführungsplatte kann eine vom Schaft der Schraube durchsetzte Zwischenhülse angeordnet sein, auf deren Oberseite ein Abschnitt der Spannklemme aufliegt, wobei die Zwischenhülse an ihrem oberen Ende einen radial nach innen vorspringenden Abschnitt und einen sich nach unten erstreckenden hohlzylindrischen Abschnitt aufweist, wobei ein Dichtungs- und Isolationselement zwischen dem Schaft der Schraube und dem hohlzylindrischen Abschnitt angeordnet ist. Das Dichtungs- und Isolationselement ist dabei bevorzugt ringförmig ausgebildet und weist elastische Materialeigenschaften auf.

Zwischen der Unterseite der Winkelführungsplatte und der Oberseite der Schwelle kann ebenfalls ein Dichtungs- und Isolationselement angeordnet sein. Dieses kann wiederum ringförmig ausgeführt sein; aber auch eine flächige Ausgestaltung ist möglich.

Mit der vorgeschlagenen Ausgestaltung des Schienenbefestigungssystems kann erreicht werden, dass die Spannklemme mit der Schraube vormontiert wird, wobei die Schraube mit einem vorgegebenen Vormontage-Drehmoment angezogen wird. Durch einfaches Verschieben der Spannklemme horizontal und senkrecht zur Längsachse der Schiene wird die Spannklemme in die Endmontageposition bewegt, was aufgrund der Ausgestaltung auch dann problemlos möglich ist, wenn ein Versatz zwischen den Schienenauflageabschnitten der Spannklemme und dem Schienenfuß vorliegt.

Die Mittelschlaufe der Spannklemme ist relativ lang ausgeführt, somit sind auch die Spannklemmarme sehr lang. Damit die nötige Spannkraft aufgebracht werden kann, ohne dass der Drahtquerschnitt geändert wird, ist für die beiden Spannklemmenarme eine Geometrie gewählt, die einen Versteifungseffekt erzielt. Der Winkel (s. unten: Winkel β) zwischen dem vorderen Teil (Schienenauflageabschnitt) des Spannklemmenarms und dem hinteren Teil (Spannabschnitt) des Spannklemmenarms ist nahezu rechtwinklig, wodurch der jeweilige Arm fast nur auf Biegung, nicht aber auf Torsion beansprucht wird. Somit können größere Kräfte übertragen werden.

Der vordere Teil der Mittelschlaufe der Spannklemme ist stark nach unten gebogen, damit im eingebauten Zustand (d. h. in der Endmontageposition) der Kippschutz der Spannklemme gegeben ist (die Mittelschlaufe ist der Kippschutz). Bei allen Schienenvarianten und Schwellenvarianten ist dabei der Abstand zum Schienenfuß (s. unten: Abstand b) nicht größer als ca. 2,0 mm.

Die Mittelschlaufe und namentlich die beiden parallel zueinander im Mittenbereich der Spannklemme verlaufenden Abschnitte weisen zwei abgeplattete Flächen auf, deren Ebenen zueinander um einen kleinen Winkel verschwenkt sind, was sich aufgrund der Länge der parallel zueinander verlaufenden Abschnitte der Mittelschlaufe und des stark abgebogenen vorderen Teils (Schlaufenabschnitt) ergibt. Die Flächen können beispielsweise durch einen Schleifvorgang erzeugt sein. Bei vorbekannten Lösungen war immer nur eine einzige abgeplattete Fläche vorhanden.

Die zusätzlich abgeplattete Fläche für die Vormontage auf der Mittelschlaufe bewirkt, dass im Vormontagezustand die Unterlegscheibe unter dem Schraubenkopf planparallel auf der Spannklemme aufliegt und somit kein Verkanten beim Einschieben der Spannklemme von der Vormontageposition in die Endmontageposition auftritt.

Die Winkelführungsplatte ist am Auflagerpunkt der Spannklemmenarme (d. h. der Schienenauflageabschnitte) für die Vormontagestellung bevorzugt keilförmig und um mindestens 10 mm gegenüber der Endposition der Spannklemmenarme auf dem Schienenfuß in der Endmontagestellung überhöht ausgeführt. Der Grund hierfür ist folgender: Im Gleisbau werden die Schwellen mit vormontierter Befestigung hintereinander im Abstand von ca. 0,65 m auf einer ersten planierten Schotterschicht ausgelegt. Danach wird die Schiene auf die Schwellen gelegt, und zwar genau in den Schienenkanal, den die vormontierte Schienenbefestigung bildet. Dabei liegt der Schienenfuß nicht immer vollständig auf den jeweiligen Schwellen auf, weil durch Unebenheiten in der Schotterbettauflage die Schwellen leicht unterschiedlich hoch liegen können. Deshalb kann dann ein bis zu 10 mm breiter Spalt zwischen der Schienenfußunterkante und dem Schwellenauflager entstehen bzw. der Schienenfuß steht dann bis zu maximal 10 mm zu hoch. Somit kann die Spannklemme nicht von der Vormontageposition in die Endmontageposition eingeschoben werden, weil sie gegen den Schienenfuß stößt. Mit der vorgeschlagenen Winkelführungsplatte mit überhöhter keilförmiger Auflage kann dieser Effekt eliminiert werden.

Weiterhin wird der Kraftaufwand beim Verschieben der Spannklemme von der Vormontageposition in die Endmontageposition dadurch reduziert, dass die Mittelschlaufe in der Vormontageposition elastisch aufgelagert ist, und zwar über ein Zwischenstück ((Zwischenhülse), in das ein hochelastischer Dichtungsring integriert ist. Dieses Zwischenstück mit Dichtungsring erfüllt die Doppelfunktion der elastischen Lagerung der Spannklemme in der Vormontageposition und eine Abdichtung gegenüber Wasser in der Endmontageposition, aber auch bereits in der Vormontageposition.

Die elektrische Isolation der Schiene gegenüber der Schwelle erfolgt üblicherweise über den Kunststoffdübel für die Schraube, die Schienenzwischenlage aus Gummi oder Kunststoff und die Kunststoffwinkelführungsplatte. Im Trockenzustand ist diese Art der Isolierung völlig ausreichend. Im Nasszustand (d. h. bei Regen) ist diese Isolierung nicht ausreichend, weil Wasser in die Spalten und Ritzen des Schienenbefestigungssystems fließt. Insbesondere ist der Dübelbereich betroffen; das in den Dübel fließende Wasser führt zur Überbrückung der elektrischen Widerstände. Im Stand der Technik hat man sich dadurch beholfen, dass in den Dübel vor der Verschraubung Fett (z. B. Elaskon) eingebracht wird. Nachdem das im unregelmäßigen Baubetrieb erfolgt und zudem das Fett nach gewisser Zeit verhärtet, ist die lsolierwirkung nur bedingt gegeben. Deshalb wird die oben beschriebene verbesserte Abdichtung gegen Wasser vorgeschlagen. Hiernach werden der Dübel und der Bereich um den Dübel komplett gegen Wasser abgedichtet. Somit wird vorteilhafter Weise der elektrische Widerstand auch bei Regen hoch gehalten.

Die Abdichtung erfolgt zunächst mittels des Zwischenstücks (Zwischenhülse) und dem Dichtring im Bereich der Mittelschlaufe. Der Dichtring dichtet aufgrund seiner Geometrie auch bereits vorteilhafter Weise in der Vormontageposition ab. Beim Verspannen ― also beim Annehmen der Endmontageposition - drückt die Mittelschlaufe der Spannklemme auf das Zwischenstück und verformt den Dichtring elastisch. Ferner ist ein weiteres Dichtungselement unten in die Winkelführungsplatte integriert. Der Innendurchmesser des beispielsweise als Dichtring ausgeführten Dichtungselements ist dabei größer als der Außendurchmesser der Dübelkrone.

In der Zeichnung sind Ausführungsbeispiele der Erfindung dargestellt. Es zeigen:
- Fig. 1: in perspektivischer Darstellung einen Teil einer Gleisanlage mit Schiene, Schwelle und Schienenbefestigungssystem, wobei eine erste Ausführungsform der Schiene dargestellt ist und wobei sich die Spannklemmen des Systems in einer Vormontageposition befinden;
- Fig. 2: in perspektivischer Darstellung eine geringfügig abgewandelte Variante der Gleisanlage mit einer zweiten Ausführungsform der Schiene;
- Fig.3: in perspektivischer Ansicht eine Spannklemme des Schienenbefestigungssystems;
- Fig.4: eine Seitenansicht des Schienenbefestigungssystems, gesehen in Längsrichtung der Schiene, wobei sich die Spannklemme in der Vormontageposition befindet;
- Fig. 5: eine geschnittene perspektivische Darstellung des Schienenbefestigungssystems, wobei sich die Spannklemme in der Vormontageposition befindet;
- Fig. 6: eine geschnittene perspektivische Darstellung des Schienenbefestigungssystems, wobei sich die Spannklemme in der Endmontageposition befindet;
- Fig.7: eine Explosionsdarstellung der Winkelführungsplatte des Schienenbefestigungssystems, wobei ein Dichtungssystem mit dargestellt ist;
- Fig.8: eine geschnittene perspektivische Darstellung des Schienenbefestigungssystems;
- Fig.9: eine perspektivische Darstellung des etwas anders ausgeführten Schienenbefestigungssystems, wobei sich die Spannklemme in der Endmontageposition befindet;
- Fig. 10: eine geschnittene Seitenansicht des Schienenbefestigungssystems nach Fig. 9, wobei sich die Spannklemme in der Vormontageposition befindet;
- Fig. 11: eine geschnittene Seitenansicht des Schienenbefestigungssystems analog zu Fig. 10, wobei sich die Spannklemme in der Endmontageposition befindet; und
- Fig. 12: in Explosionsdarstellung die Winkelführungsplatte des Schienenbefestigungssystems nach Fig. 9, wobei insbesondere ein Dichtungssystem dargestellt ist.

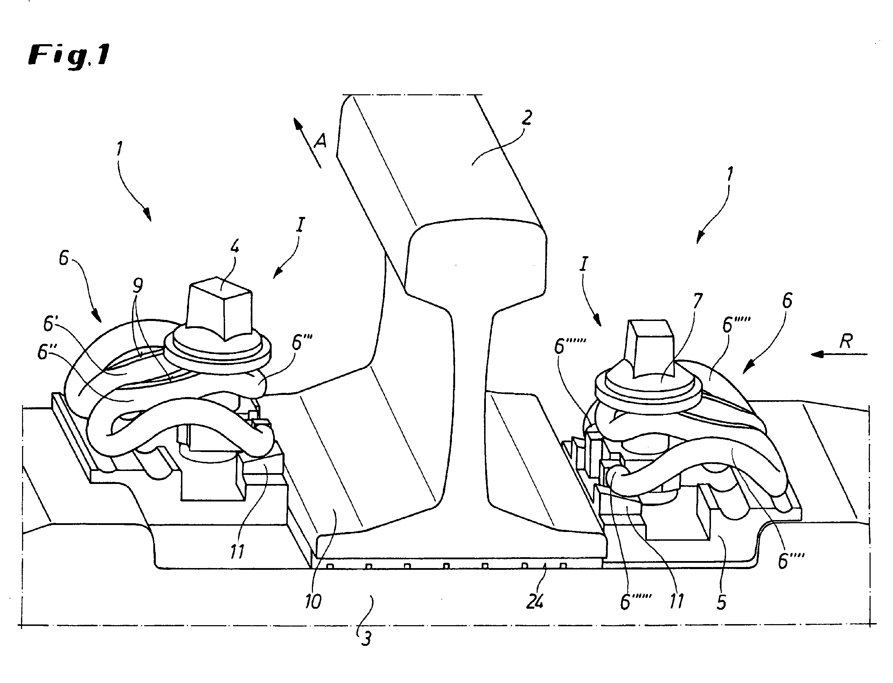

In Fig. 1 ist der grundsätzliche Aufbau eines kraftschlüssig-elastischen Schienenbefestigungssystems 1 für eine Gleisanlage zu sehen. Die Schiene 2 muss auf einer Schwelle 3 (oder einer Schienenunterlagsplatte) befestigt werden. Hierzu ist an der Schwelle 3 eine Ausnehmung 24 vorgesehen.

Für die Halterung der Schiene 2 und namentlich des Schienenfußes 10, sind beiderseits der Schiene 2 Winkelführungsplatten 5 vorgesehen, die mit je einer Schraube 4 an der Schwelle 3 verschraubt sind. Die kraftschlüssig-elastische Halterung des Schienenfußes 10 erfolgt über eine Spannklemme 6, die durch die Schraube 4 mit verspannt wird. In Fig. 1 dargestellt ist eine Vormontageposition I, in der die Schrauben 4 mit einem Anzugsdrehmoment von ca. 50 Nm angezogen sind, d. h. noch nicht richtig angezogen sind.

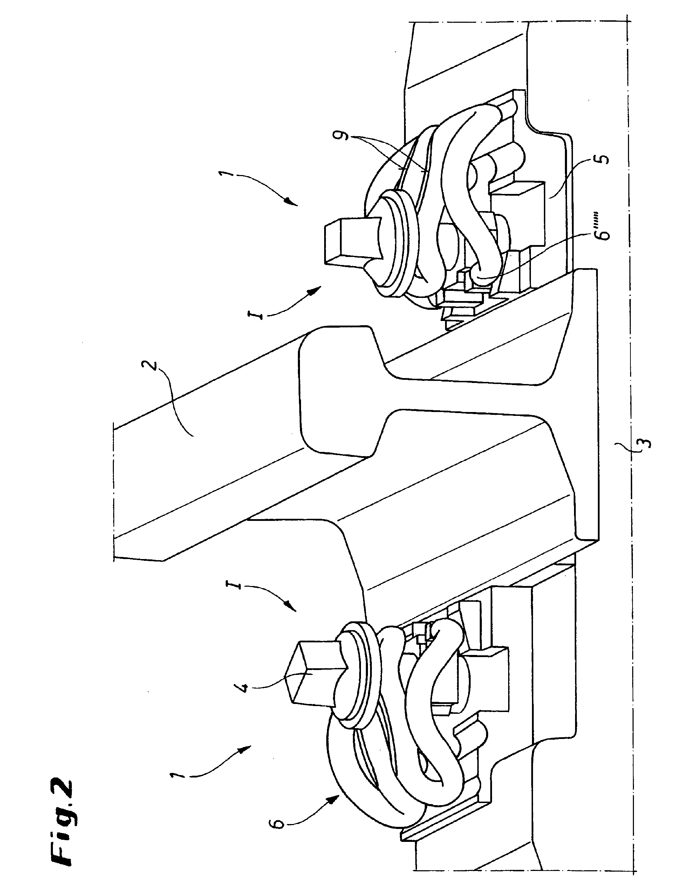

In Fig. 2 ist eine geringfügig andere Lösung zu sehen, nämlich eine solche mit einer anderen Schiene 2. Entsprechend kommen hier in der Dimensionierung andere Winkelführungsplatten 5 zum Einsatz.

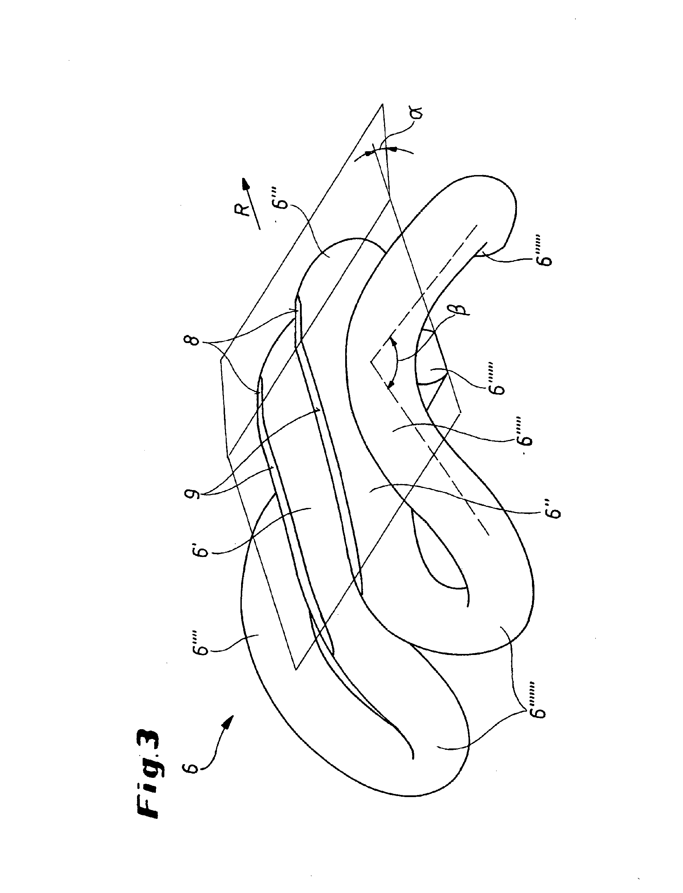

Die Ausgestaltung der Spannklemme 6 geht aus Fig. 3 hervor. Die Spannklemme 6 hat im Mittenbereich zwei parallel zueinander verlaufende Abschnitte 6' und 6", die an ihrem der Schiene zugewandten Ende über einen Schlaufenabschnitt 6''' miteinander verbunden sind.

Die Abschnitte 6' und 6" sowie der Schlaufenabschnitt 6''' bilden eine Mittelschlaufe. Über Verbindungsabschnitte 6"""' sind die Abschnitte 6' und 6" mit Spannklemmenabschnitten 6"" verbunden. Diese unterteilen sich in Spannabschnitte 6""" und Schienenauflageabschnitte 6""".

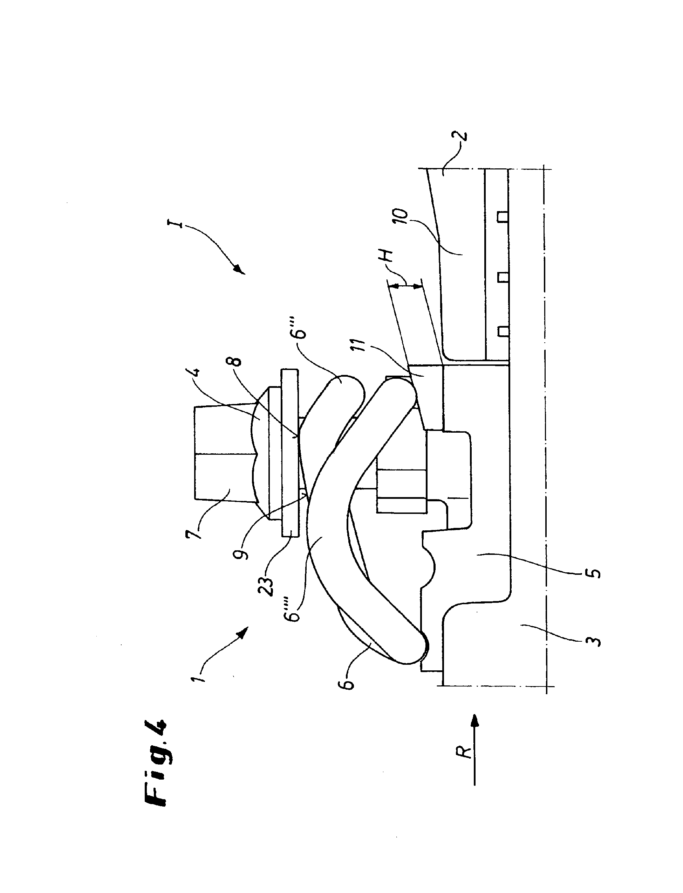

Wie in Fig. 4 gesehen werden kann, wird in der Vormontageposition I (aber auch in der später dargestellten Endmontageposition) die Spannklemme 6 durch den Kopf 7 der Schraube 4 in Richtung auf die Winkelführungsplatte 5 vorgespannt. Genauer gesagt erfolgt diese Vorspannung indirekt über eine Unterlegscheibe 23. Für die direkte oder indirekte Auflage des Kopfs 7 der Schraube 4 in der Vormontageposition I ist eine erste im wesentlichen ebene Auflagefläche 8 (an jedem Abschnitt 6' und 6") an der Spannklemme 6 vorgesehen. Weiterhin ist für die direkte oder indirekte Auflage des Kopfs 7 der Schraube 4 in der Endmontageposition II eine zweite im wesentlichen ebene Auflagefläche 9 (an jedem Abschnitt 6' und 6") an der Spannklemme 6 vorhanden, s. Fig. 3.

Wesentlich ist hierbei, dass die Ebene der ersten Auflagefläche 8 und die Ebene der zweiten Auflagefläche 9 relativ zueinander um einen Winkel α verschwenkt angeordnet sind (s. Fig. 3). Dieser Winkel liegt meist im Bereich zwischen 3° und 20°.

Mit Blick auf Fig. 3 ist noch anzumerken, dass die Längserstreckung des Spannabschnitts 6""' und die Erstreckung des Schienenauflageabschnitts 6""" unter einem Winkel β verlaufen, der bei ca. 90° liegt.

Die Winkelführungsplatte 5 hat des weiteren Auflagen 11 mit keilförmiger Oberseite, die für die Auflage der Schienenauflageabschnitte 6""" der Spannklemme 6 vorgesehen sind, wenn sich diese in der Vormontageposition I befindet.

Wie in Fig. 4 zu sehen ist, bildet sich durch die Auflagen 11 in dem der Schiene 2 zugewandten Endbereich eine Stufe mit einer Höhe H, so dass bei der Montage gegebenenfalls vorhandene Unebenheiten der Schiene auf der Schwelle ausgeglichen werden können.

Durch die beiden Auflageflächen 8 und 9 ist ein verkantungsfreies Verschieben der Spannklemme 6 von der Vormontageposition I in die Endmontageposition II möglich. Die Verschieberichtung ist mit R eingezeichnet. Die Richtung R liegt im wesentlichen horizontal und senkrecht zur Längsachse A der Schiene 2.

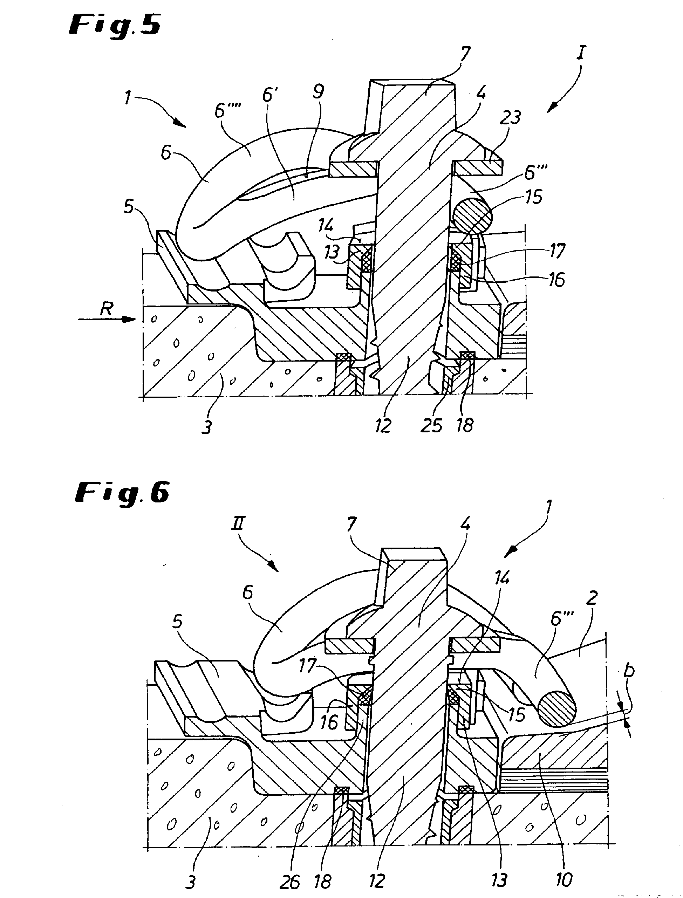

In Fig. 5 ist zu sehen, dass der Schaft 12 der Schraube 4 eine Zwischenhülse 13 durchsetzt. Die Zwischenhülse 13 hat eine Oberseite 14, die von der Spannklemme von oben mit einer Kraft beaufschlagt wird. Sie hat weiterhin einen radial nach innen vorspringenden Abschnitt 15 und einen hohlzylindrischen Abschnitt 16, so dass im Inneren der Zwischenhülse 13 ein Aufnahmeraum für ein ringförmiges Dichtungs- und lsolationselement 17 gebildet wird. Im Bodenbereich ist die Winkelführungsplatte 5 über ein weiteres ringförmiges Dichtungs- und lsolationselement 18 zum Dübel 25 in der Schwelle abgedichtet.

In Fig. 6 ist zu sehen, dass die Spannklemme 6 von der Vormontageposition in die Endmontageposition II geschoben wurde. Zu erkennen ist, dass der Schlaufenabschnitt 6'" der Spannklemme 6 mit einem geringen Abstand b zum Schienenfuß 10 zu liegen kommt, wodurch ein Kippschutz gegeben ist.

In Fig. 6 ist die Schraube 4 mit dem End-Anzugsdrehmoment angezogen, so dass die Zwischenhülse mit ihrem hohlzylindrischen Abschnitt 16 auf einen formkongruenten Führungsabschnitt 26 der Winkelführungsplatte 5 aufgeschoben wurde. Das Dichtungs- und Isolationselement 17 hat sich entsprechend verformt und dichtet zuverlässig ab.

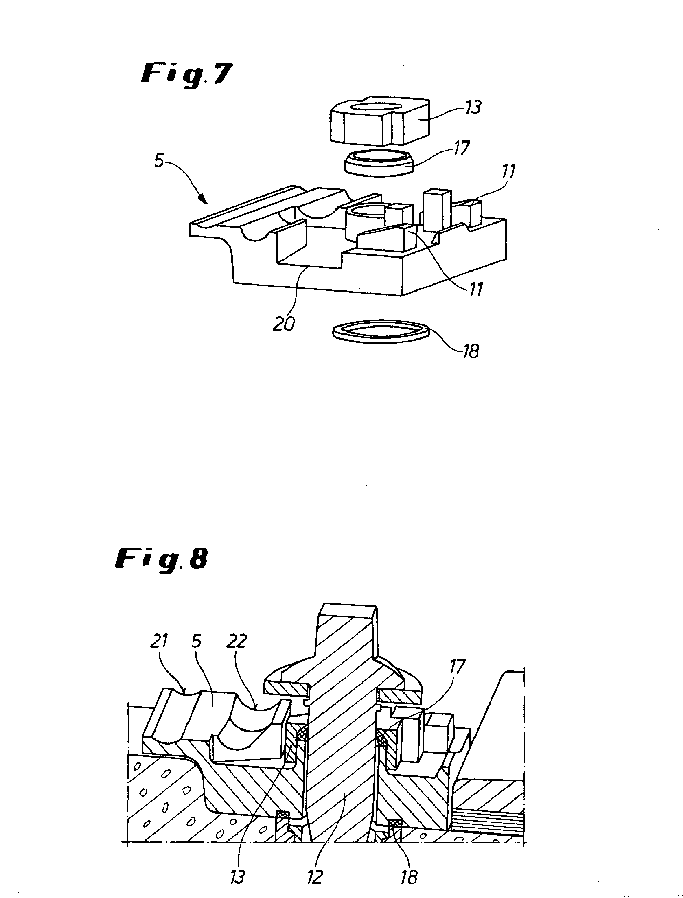

In Fig. 7 ist die Dichtungsanordnung noch einmal näher dargestellt. Hier ist auch eine Abtropfkante 20 markiert, die am Ende einer Ablaufschräge für Wasser angeordnet ist, die auf der Oberfläche der Winkelführungsplatte 5 ausgebildet ist.

In Fig. 8 ist zu erkennen, dass für die zuverlässige Festlegung der Spannklemme 6 in der Vormontageposition I eine Ausnehmung 21 in der Winkelführungsplatte 5 ausgebildet ist; für die Endmontageposition II ist eine etwas tiefer ausgebildete Ausnehmung 22 vorgesehen.

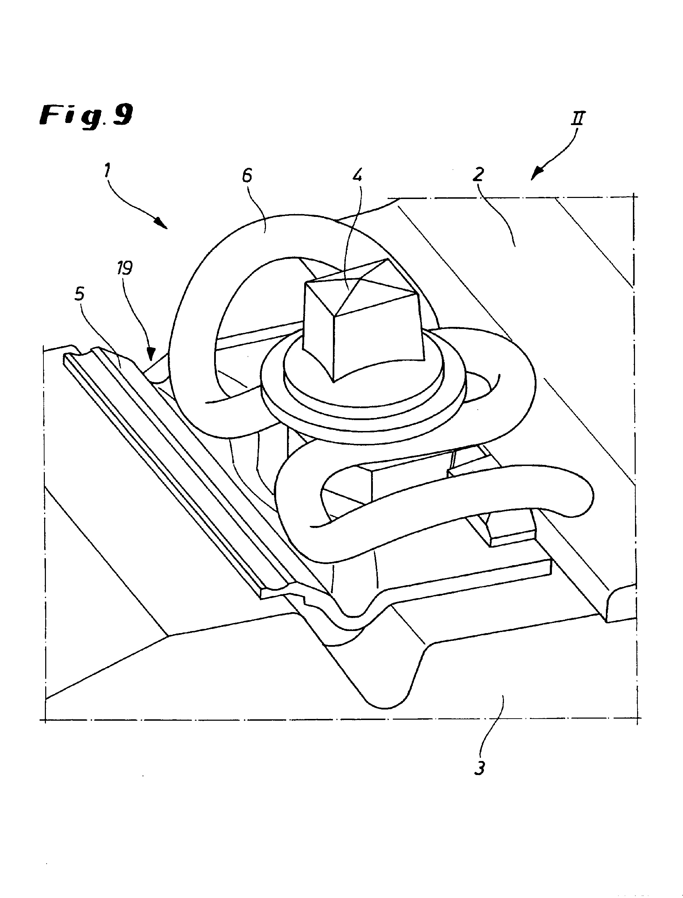

Bei der Winkelführungsplatte 5, die in Fig. 9 dargestellt ist, ist eine Ablaufrinne 19 für Wasser zu erkennen, mit der die Platte versehen sein kann.

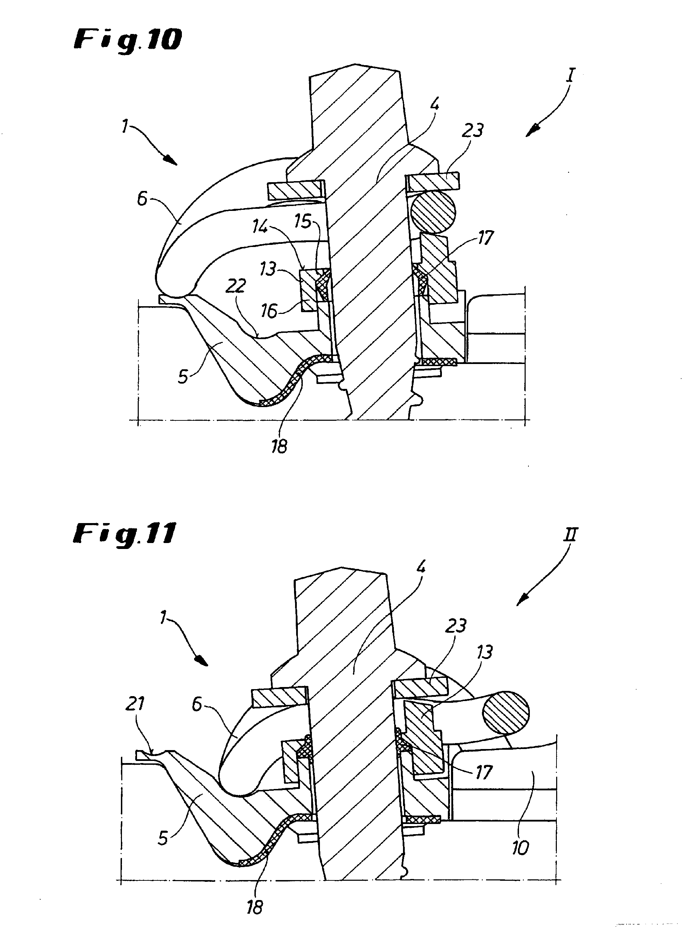

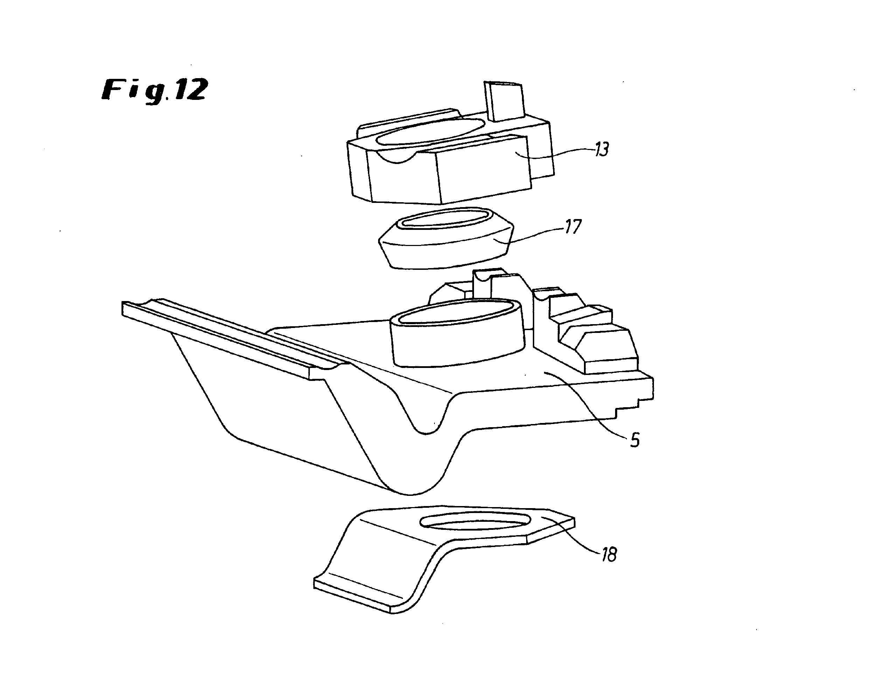

In den Figuren 10 bis 12 ist eine alternative Lösung zu sehen, bei der das Dichtungs- und Isolationselement 18 nicht ringförmig ausgebildet ist, sondern eine plattenförmige Struktur hat. Diese Platte ist an der Unterseite der Winkelführungsplatte 5 angeordnet.

### Bezugszeichenliste:

- 1: Schienenbefestigu ngssystem
- 2: Schiene
- 3: Schwelle
- 4: Schraube
- 5: Winkelführungsplatte
- 6: Spannklemme
- 6': Abschnitt der Spannklemme
- 6": Abschnitt der Spannklemme
- 6‴: Schlaufenabschnitt der Spannklemme
- 6', 6", 6"': Mittelschlaufe
- 6"": Spannklemmenarm
- 6"'": Spannabschnitt
- 6""": Schienenauflageabschnitt
- 6"""': Verbindungsabschnitt
- 7: Kopf der Schraube
- 8: erste Auflagefläche
- 9: zweite Auflagefläche
- 10: Schienenfuß
- 11: Auflage
- 12: Schaft der Schraube
- 13: Zwischenhülse (Dichtkopf)
- 14: Oberseite der Zwischenhülse
- 15: radial vorspringender Abschnitt
- 16: hohlzylindrischer Abschnitt
- 17: Dichtungs- und Isolationselement
- 18: Dichtungs- und Isolationselement
- 19: Ablaufrinne
- 20: Abtropfkante
- 21: Ausnehmung für Spannklemme
- 22: Ausnehmung für Spannklemme
- 23: Unterlegscheibe
- 24: Ausnehmung
- 25: Dübel
- 26: Führungsabschnitt

- I: Vormontageposition
- II: Endmontageposition
- R: Verschieberichtung
- A: Längsachse der Schiene
- H: Höhe
- b: Abstand
- α: Winkel
- β: Winkel

## Patentansprüche

1. Schienenbefestigungssystem (1) zur kraftschlüssig-elastischen Befestigung einer Schiene (2) auf einer Schwelle (3) einer Gleisanlage, umfassend mindestens eine an der Schwelle (3) mit mindestens einer Schraube (4) festlegbare Winkelführungsplatte (5) und mindestens eine Spannklemme (6), wobei dass die Winkelführungsplatte (5) ausgebildet ist, um die Spannklemme (6) in einer Vormontageposition (I) und in einer Endmontageposition (II) zu halten,
**dadurch gekennzeichnet, dass**
die Endmontageposition (II) durch Verschieben der Spannklemme (6) relativ zur Winkelführungsplatte (5) aus der Vormontageposition (I) in Richtung (R) senkrecht zur Langsachse (A) der Schiene (2) auf die Schiene (2) zu einzunehmen ist,
wobei die Spannktemme (6) in der Vormontageposition (I) und in der Endmontageposition (II) durch den Kopf (7) der mindestens einen Schraube (4) direkt oder indirekt in Richtung auf die Winkelführungsplatte (5) vorspannbar ist,
wobei für die direkte oder indirekte Auflage des Kopfs (7) der Schraube (4) in der Vormontageposition (I) mindestens eine erste im wesentlichen ebene Auflagefläche (8) an der Spannklemme (6) vorgesehen ist,
wobei für die direkte oder indirekte Auflage des Kopfs (7) der Schraube (4) in der Endmontageposition (II) mindestens eine zweite im wesentlichen ebene Auflagefläche (9) an der Spannklemme (6) vorgesehen ist und
wobei die Ebene der ersten Auflagefläche (8) und die Ebene der zweiten Auflagefläche (9) relativ zueinander um einen Winkel (α) verschwenkt angeordnet sind.

2. Schienenbefestigungssystem nach Anspruch 1, **dadurch gekennzeichnet, dass** der Winkel (α) zwischen 2° und 30° liegt, vorzugsweise zwischen 3° und 20°.

3. Schienenbefestigungssystem nach Anspruch 1 oder 2, **dadurch gekennzeichnet, dass** die Spannklemme (6) zwei parallel zueinander verlaufende Abschnitte (6', 6") aufweist, die an einem Ende über einen Schlaufenabschnitt (6'") miteinander verbunden sind und eine Mittelschlaufe bilden, und dass beidseitig neben der Mittelschlaufe je ein Spannklemmenarm (6"") angeordnet ist, wobei die erste und zweite Auflagefläche (8, 9) auf der Oberseite der Mittelschlaufe (6', 6", 6"') angeordnet sind.

4. Schienenbefestigungssystem nach Anspruch 3, **dadurch gekennzeichnet, dass** der Schlaufenabschnitt (6"') in Richtung des Schienenfußes (10) zu gebogen ist, so dass der gebogene Abschnitt (6"') in der Endmontageposition (II) mit einem geringen Abstand (b), insbesondere mit einem Abstand (b) zwischen 0,5 mm und 3 mm, vom Schienenfuß (10) entfernt liegt.

5. Schienenbefestigungssystem nach Anspruch 3 oder 4, **dadurch gekennzeichnet, dass** jeder Spannklemmenarm (6"") einen im wesentlichen parallel zu einem Abschnitt (6', 6") der Mittelschlaufe verlaufenden Spannabschnitt (6""') aufweist, an den sich ein Schienenauflageabschnitt (6""") anschließt, der zum Spannabschnitt (6""') unter einem Winkel (β) verläuft, der vorzugsweise zwischen 80° und 100° beträgt.

6. Schienenbefestigungssystem nach Anspruch 5, **dadurch gekennzeichnet, dass** die Winkelführungsplatte (5) für den Schienenauflageabschnitt (6""") der Spannklemme (6) eine vorzugsweise keilförmig ausgebildete Auflage (11) aufweist, auf der der Schienenauflageabschnitt (6""") in der Vormontageposition (I) aufliegt.

7. Schienenbefestigungssystem nach Anspruch 6, **dadurch gekennzeichnet, dass** das der Schiene (2) zugewandte Ende der vorzugsweise keilförmig ausgebildeten Auflage (11) den Schienenfuß (10) um eine vorgegebene Höhe (H) überragt, vorzugsweise um eine Höhe zwischen 5 mm und 15 mm.

8. Schienenbefestigungssystem nach einem der Ansprüche 1 bis 7, **dadurch gekennzeichnet, dass** zwischen dem Kopf (7) der Schraube (4) und der Winkelführungsplatte (5) eine vom Schaft (12) der Schraube (4) durchsetzte Zwischenhülse (13) angeordnet ist, auf deren Oberseite (14) ein Abschnitt der Spannklemme (6) aufliegt, wobei die Zwischenhülse an ihrem oberen Ende einen radial nach innen vorspringenden Abschnitt (15) und einen sich nach unten erstreckenden hohlzylindrischen Abschnitt (16) aufweist, wobei ein Dichtungs- und Isolationselement (17) zwischen dem Schaft (12) der Schraube (4) und dem hohlzylindrischen Abschnitt (16) angeordnet ist.

9. Schienenbefestigungssystem nach Anspruch 8, **dadurch gekennzeichnet, dass** das Dichtungs- und Isolationselement (17) ringförmig ausgebildet ist und elastische Materialeigenschaften aufweist.

10. Schienenbefestigungssystem nach einem der Ansprüche 1 bis 9, **dadurch gekennzeichnet, dass** zwischen der Unterseite der Winkelführungsplatte (5) und der Oberseite der Schwelle (3) ein Dichtungs- und Isolationselement (18) angeordnet ist.

## Claims

1. A rail fastening system (1) for frictionally-elastically fastening a rail (2) on a sleeper (3) of a track system, comprising at least one angular guide plate (5) that can be fixed on the sleeper (3) with at least one bolt (4) and at least one tension clamp (6), wherein the angular guide plate (5) is designed for holding the tension clamp (6) in a pre-assembly position (I) and in a final assembly position (II),
**characterized in that**
the final assembly position (II) is to be assumed by displacing the tension clamp (6) relative to the angular guide plate (5) from the pre-assembly position (I) toward the rail (2) in the direction (R) extending perpendicular to the longitudinal axis (A) of the rail (2),
wherein the tension clamp (6) can in the pre-assembly position (I) and in the final assembly position (II) be directly or indirectly prestressed in the direction of the angular guide plate (5) by the head (7) of the at least one bolt (4),
wherein at least one first, essentially plane support surface (8) is provided on the tension clamp (6) in order to directly or indirectly support the head (7) of the bolt (4) in the pre-assembly position (I),
wherein at least one second, essentially plane support surface (9) is provided on the tension clamp (6) in order to directly or indirectly support the head (7) of the bolt (4) in the final assembly position (II), and
wherein the plane of the first support surface (8) and the plane of the second support surface (9) are inclined relative to one another by an angle (α).

2. The rail fastening system according to Claim 1, **characterized in that** the angle (α) lies between 2° and 30°, preferably between 3° and 20°.

3. The rail fastening system according to Claim 1 or 2, **characterized in that** the tension clamp (6) features two sections (6', 6") extending parallel to one another, wherein said sections are connected to one another on one end by means of a loop section (6''') and form a center loop, and **in that** a tension clamp arm (6'''') is respectively arranged adjacent to the center loop on both sides, wherein the first and the second support surface (8, 9) are arranged on the upper side of the center loop (6', 6'', 6''').

4. The rail fastening system according to Claim 3, **characterized in that** the loop section (6''') is bent in the direction of the rail base (10) such that the bent section (6''') is in the final assembly position (II) spaced apart from the rail base (10) by a short distance (b), particularly by a distance (b) between 0.5 mm and 3 mm.

5. The rail fastening system according to Claim 3 or 4, **characterized in that** each tension clamp arm (6"") features a tensioning section (6''''') extending essentially parallel to a section (6', 6'') of the center loop, wherein said tensioning section is followed by a rail support section (6'''''') that is inclined relative to the tensioning section (6''''') by an angle (β) that preferably lies between 80° and 100°.

6. The rail fastening system according to Claim 5, **characterized in that** the angular guide plate (5) features a preferably wedge-shaped support (11) for the rail support section (6'''''') of the tension clamp (6), wherein the rail support section (6'''''') rests on this wedge-shaped support in the pre-assembly position (I).

7. The rail fastening system according to Claim 6, **characterized in that** the end of the preferably wedge-shaped support (11) facing the rail (2) projects above the rail base (10) by a predefined height (H), preferably by a height between 5 mm and 15 mm.

8. The rail fastening system according to one of Claims 1 to 7, **characterized in that** an intermediate sleeve (13) is arranged between the head (7) of the bolt (4) and the angular guide plate (5), wherein the shaft (12) of the bolt (4) extends through this intermediate sleeve and a section of the tension clamp (6) rests on its upper side (14), wherein the intermediate sleeve features on its upper end a section (15) that projects radially inward and a hollow-cylindrical section (16) that extends downward, and wherein a sealing and insulating element (17) is arranged between the shaft (12) of the bolt (4) and the hollow-cylindrical section (16).

9. The rail fastening system according to Claim 8, **characterized in that** the sealing and insulating element (17) is realized annularly and has elastic material properties.

10. The rail fastening system according to one of Claims 1 to 9, **characterized in that** a sealing and insulating element (18) is arranged between the underside of the angular guide plate (5) and the upper side of the sleeper (3).

## Revendications

1. Système de fixation de rail (1) pour la fixation élastique par correspondance mécanique d'un rail (2) sur une traverse (3) d'une installation ferroviaire, comprenant au moins une plaque de guidage angulaire (5) pouvant être fixée sur la traverse (3) à l'aide d'au moins une vis (4) et au moins une pince de serrage (6), dans lequel la plaque de guidage angulaire (5) est conçue pour maintenir la pince de serrage (6) dans une position de prémontage (I) et dans une position de montage final (II),
**caractérisé en ce que**
la position de montage final (II) se prend par décalage de la pince de serrage (6) par rapport à la plaque de guidage angulaire (5) depuis la position de prémontage (I) dans la direction (R) perpendiculaire à l'axe longitudinal (A) du rail (2) vers le rail (2),
la pince de serrage (6) pouvant être précontrainte dans la position de prémontage (I) et dans la position de montage final (II) par la tête (7) de l'au moins une vis (4) directement ou indirectement en direction de la plaque de guidage angulaire (5),
sachant que, pour l'appui ou indirect de la tête (7) de la vis (4) dans la position de prémontage (I), au moins une première surface d'appui sensiblement plane (8) est prévue au niveau de la pince de serrage (6),
au moins une seconde surface d'appui sensiblement plane (9) est prévue au niveau de la pince de serrage (6) pour l'appui ou indirect de la tête (7) de la vis (4) dans la position de montage final (II) et
le plan de la première surface d'appui (8) et le plan de la seconde surface d'appui (9) sont disposés pivotés l'un par rapport à l'autre à raison d'un angle (α).

2. Système de fixation de rail selon la revendication 1, **caractérisé en ce que** l'angle (α) est compris entre 2° et 30°, de préférence entre 3° et 20°.

3. Système de fixation de rail selon la revendication 1 ou 2, **caractérisé en ce que** la pince de serrage (6) présente deux sections (6', 6") s'étendant parallèlement l'une à l'autre, qui sont reliées entre elles à une extrémité par une section de boucle (6"') et forment une boucle centrale et qu'est disposé sur chacun des deux côtés, près de la boucle centrale, un bras de pince de serrage (6""), la première et la seconde surface d'appui (8, 9) étant disposées sur le dessus de la boucle centrale (6', 6", 6''').

4. Système de fixation de rail selon la revendication 3, **caractérisé en ce que** la section de boucle (6''') est recourbée en direction du pied de rail (10), de sorte que la section recourbée (6"'), en position de montage final (II), est éloignée d'une faible distance (b), en particulier d'une distance (b) comprise entre 0,5 mm et 3 mm, du pied de rail (10).

5. Système de fixation de rail selon la revendication 3 ou 4, **caractérisé en ce que** chaque bras de pince de serrage (6'''') présente une section de serrage (6''''') s'étendant sensiblement parallèlement à une section (6', 6'') de la boucle centrale et à laquelle se raccorde une section d' appui de rail (6'''''') qui s'étend par rapport à la section de serrage (6''''') suivant un angle (β) qui est de préférence de 80° à 100°.

6. Système de fixation de rail selon la revendication 5, **caractérisé en ce que** la plaque de guidage angulaire (5) pour la section d'appui de rail (6'''''') de la pince de serrage (6) présente un support (11) de conformation de préférence conique sur lequel la section d'appui de rail (6'''''') repose en position de prémontage (I).

7. Système de fixation de rail selon la revendication 6, **caractérisé en ce que** la section tournée vers le rail (2) du support (11) de conformation de préférence conique dépasse du pied du rail (10) d'une hauteur prédéfinie (H), de préférence d'une hauteur comprise entre 5 mm et 15 mm.

8. Système de fixation de rail selon une des revendications 1 à 7, **caractérisé en ce que**, entre la tête (7) de la vis (4) et la plaque de guidage angulaire (5), est disposé un manchon intermédiaire (13) dans lequel passe la tige (12) de la vis (4)et sur le dessus (14) duquel repose une section de la pince de serrage (6), le manchon intermédiaire présentant à son extrémité supérieure une section (15) s'avançant radialement vers l'intérieur et une section cylindrique creuse (16) s'étendant vers le bas, un élément d'étanchéité et d'isolation (17) étant disposé entre la tige (12) de la vis (4) et la section cylindrique creuse (16).

9. Système de fixation de rail selon la revendication 8, **caractérisé en ce que** l'élément d'étanchéité et d'isolation (17) est réalisé en forme annulaire et présente des propriétés matérielles élastiques.

10. Système de fixation de rail selon une des revendications 1 à 9, **caractérisé en ce que**, entre le dessous de la plaque de guidage angulaire (5) et le dessus de la traverse (3), un élément d'étanchéité et d'isolation (17) est disposé.
